# EUROPEAN PATENT SPECIFICATION

(11) **EP 4 023 402 B1**
(45) Date of publication and mention of the grant of the patent: **14.08.2024**
(21) Application number: 20895211.9
(22) Date of filing: 08.05.2020
(51) Int. Cl.: B26F 1/12, B26F 1/14, B21D 28/24, B21D 28/34

(54) **NOTCHING APPARATUS**
RASTVORRICHTUNG
APPAREIL À ENCOCHER

(30) Priority: 04.12.2019 KR 20190160231
(43) Date of publication of application: 06.07.2022
(73) Proprietor: LG ENERGY SOLUTION, LTD., Seoul 07335 (KR)
(72) Inventor: PARK, Sung Chul, Daejeon 34122 (KR); KIM, Sang Wook, Daejeon 34122 (KR); HONG, Jeong Woo, Daejeon 34122 (KR); PARK, Dong Hyeuk, Daejeon 34122 (KR); YOON, Se Hyun, Daejeon 34122 (KR); KWON, Chun Ho, Daejeon 34122 (KR); LEE, Chung Hee, Daejeon 34122 (KR); JEONG, Byung Joo, Daejeon 34122 (KR)
(74) Representative: Plasseraud IP
(86) International application number: PCT/KR2020/006118
(87) International publication number: WO 2021/112347

(56) References cited:
- JP-A- 2013 102 044
- KR-A- 20180 014 560
- KR-A- 20190 096 115
- KR-B1- 101 115 299
- KR-B1- 101 813 249
- US-A1- 2001 020 410

## Description

### TECHNICAL FIELD

The present invention relates to a notching apparatus with which an electrode substrate is cut and processed into an individual electrode in which an electrode tab is formed and, more specifically, to a notching apparatus in which a punch mounted and fixed to a holder is prevented from being shaken.

### BACKGROUND ART

Lithium secondary batteries which are chargeable/dischargeable and lightweight and have high output densities are being widely used as energy sources for various devices.

Also, the lithium secondary batteries have attracted considerable attention as power sources for hybrid electric vehicles (HEV), plug-in hybrid electric vehicles (PHEV), battery electric vehicles (BEV), and electric vehicles (EV), which have been developed to solve limitations, for example, air pollution and green-house gases, caused by existing internal-combustion engine vehicles that use fossil fuels such as gasoline and diesel vehicles.

Such a secondary battery generally has a structure comprising: an electrode assembly in which electrodes (a positive electrode, a negative electrode) and a separator are alternately stacked; an electrolyte for moving ions to the electrodes; and a case in which the electrode assembly and the electrolyte are accommodated.

Also, a method for manufacturing the secondary battery may be mainly divided into: an electrode plate process of manufacturing each of a positive electrode and a negative electrode; an assembly process of manufacturing an electrode assembly using the positive electrode and the negative electrode and inserting the electrode assembly into the case together with an electrolyte; and a formation process of activating ion movement of the electrode assembly. Each of the electrode plate process, the assembly process, and the formation process is divided into individual sub-processes.

Here, the electrode plate process comprises: a mixing process of adding a conductive material and a binder to an active material and mixing the same; a coating process of applying a mixed active material onto a collector; a press process of pressing the active material to a surface of the collector; and a notching and slitting process (a notching process) of cutting an electrode substrate, which is manufactured by adhering the active material to the surface of the collector, into a desired size and then (or simultaneously with the cutting) shearing the cut electrode substrate so as to form an electrode tab.

Here, the electrode substrate in which the active material is applied on the surface of the collector is in a cut state to a certain size, and on the electrode substrate, formed are a coating portion coated with the active material and a non-coating portion not coated with the active material. The active material in the electrode substrate is applied with a smaller width than the collector, and thus the electrode substrate has a structure in which non-coating portions are formed on both side edges with a coating portion therebetween.

A notching apparatus for cutting the electrode substrate to form an electrode tab is generally configured with a punching (press) die that facilitates uniform repeatable processes.

The punching die used in the notching apparatus comprises an upper die and a lower die (or has one of an upper die and a lower die and comprises a supporter instead of the other). One of the upper die and the lower die is fixed, and the other is configured to be vertically slidable to periodically descend and punch an electrode substrate, which is a punch target, while the electrode substrate moves between the upper die and the lower die.

Here, the sliding upper die or lower die has a structure in which a plate-shaped holder 2 is coupled to a plate-shape base 3. A mounting groove 2a is provided in the holder 2, and a punch 1, which strikes the electrode substrate to form a shape or cuts the electrode substrate, is coupled to the mounting groove 2a.

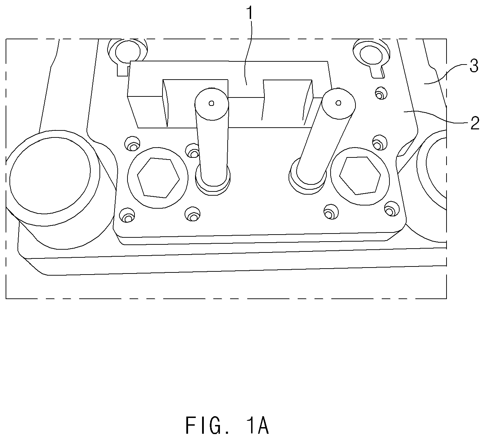

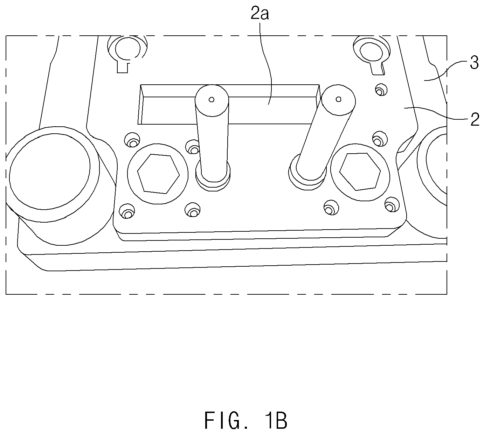

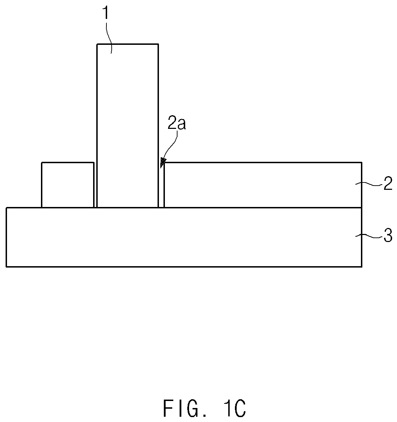

That is, referring to FIG. 1A illustrating a state in which the punch 1 is coupled to the mounting groove 2a of the holder 2, FIG. 1B illustrating a state in which the punch 1 is removed from FIG. 1A, and FIG. 1C illustrating a cross-section of portions of FIG. 1A in which the punch 1 is mounted, the punch 1 is in a state of being inserted into the mounting groove 2a, and the mounting groove 2a is provided to have the same size in a direction in which the punch 1 is inserted.

However, as punching processes are performed continuously, impact and vibration are accumulated, and a gap between the mounting groove 2a and the punch 1 gradually increases (a mounting groove is slightly widened). Thus, shaking of the punch 1 occurs.

An accurate position is not struck due to such shaking of the punch 1, which causes a process failure. Also, a replacement period of the punch 1 and/or the holder 2 is shortened to increase production cost.
US 2001/020410 A1 discloses a notching apparatus. A block with an inclined surface and a complementary inclined wedge are used to clamp the punch.

### DISCLOSURE OF THE INVENTION

### TECHNICAL PROBLEM

Thus, to solve the problems described above, a main objective of the present invention is to provide a notching apparatus in which a gap to be generated in a mounting groove is minimized to prevent a punch from shaking.

### TECHNICAL SOLUTION

To achieve the above-described objects, the present invention, which is defined in claim 1, provides a notching apparatus in which a punch descends to notch an electrode as defined in the appended set of claims, the notching apparatus comprising: a holder having one surface in which a mounting groove is provided; the punch having one end inserted into the mounting groove; and a block inserted into the mounting groove together with the punch, wherein, when inserted into the mounting groove, the block presses the punch so that the punch comes into close contact with one of inner surfaces of the mounting groove.

The mounting groove comprises a first inner surface perpendicular to a bottom surface of the holder and a second inner surface inclined with respect to the bottom surface of the holder, and the block enters in contact with the second inner surface to press the punch toward the first inner surface.

A portion of the block, which is in contact with the second inner surface, is provided as an inclined surface, and when the portion provided as the inclined surface comes into contact with the second inner surface, an opposite surface of the inclined surface of the block is parallel to an outer circumferential surface of the punch to come into contact with the punch.

In the block, an angle at a point where a virtual line extending from the inclined surface meets a virtual line extending from the opposite surface ranges from 0.5° to 2°.

Friction force between the block and the second inner surface is greater than that between the block and the first inner surface.

The block may be made of a metal material having a friction coefficient greater than that of the punch.

The block is punched to provide a coupling hole, and a female screw thread is provided on an inner circumferential surface of the coupling hole.

Also, friction force between the second inner surface and the block is greater than that between the block and the punch. That is, a surface between the second inner surface and the block is rougher than that between the block and the punch to increase in friction force. Also, it is desirable the block is made of the same metal material as the holder.

Thus, the present invention may further provide an electrode which is notched by the notching apparatus having the above-described configuration and an electrode assembly which is manufactured by stacking the plurality of electrodes.

### ADVANTAGEOUS EFFECTS

The present invention having the above-described configuration may prevent the punch from shaking because the wedge-shaped block is inserted into the mounting groove together with the punch and presses the punch so that the punch comes into close contact with one of the inner surfaces of the mounting groove.

Since the friction force between the block and the second inner surface is greater than the friction force between the block and the first inner surface, the block may be prevented from separating.

The block is punched to provide the coupling hole, and the female screw thread is provided on the inner circumferential surface of the coupling hole. Thus, the block may be removed using a common tool and a dedicated tool.

### BRIEF DESCRIPTION OF THE DRAWINGS

FIG. 1A is a perspective view illustrating a state in which a punch is coupled to a mounting groove of a holder.
FIG. 1B is a perspective view illustrating a state in which the punch is removed from FIG. 1A.
FIG. 1C is a cross-sectional view illustrating a state of portions of FIG. 1A in which the punch is mounted.
FIG. 2 is a cross-sectional view illustrating a state in which a block according to the present invention is inserted into a mounting groove together with a punch.
FIG. 3 shows an enlarged view illustrating a state in which a second inner surface of a mounting groove and a block are in contact with each other and an enlarged view illustrating a state in which a punch and the block are in contact with each other.

### MODE FOR CARRYING OUT THE INVENTION

Hereinafter, the present invention will be described in detail with reference to the accompanying drawings so that the present invention can be easily carried out by a person skill in the art to which the present invention pertains. However, the present invention may be embodied in several different forms, and not be limited to the embodiments set forth herein.

A part unrelated to the description will be omitted so as to clearly describe the present invention, and the same reference symbols are affixed to identical or similar elements throughout the specification.

The present invention is to achieve the above-described object and relates to a notching apparatus in which a punch descends to notch an electrode. Hereinafter, embodiments of the present invention will be described in more detail with reference to the accompanying drawings.

### First embodiment

A notching apparatus in the embodiment is provided as a punching die that comprises an upper die and a lower die (or at least one of the upper die and the lower die) as described above. That is, one of the upper die and the lower die is fixed, and the other is configured to be vertically slidable to periodically descend and punch an electrode substrate, which is a punch target, while the electrode substrate moves between the upper die and the lower die. In the embodiment, a punch 10 and a holder 20 are mounted on one of the upper die and the lower die, which ascends and descends to perform punching.

Among the upper die and the lower die, the sliding die has a structure in which a plate-shaped holder 20 is coupled to a plate-shaped base 30.

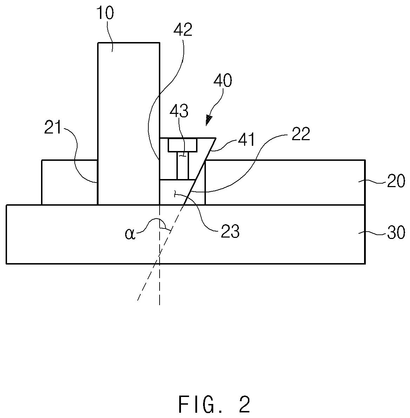

Also, as in FIG. 2 illustrating a state in which a block 40 is inserted into a mounting groove 23 together with the punch 10 according to the present invention, the mounting groove 23 is provided in the holder 20, and the punch 10, which strikes the electrode substrate to form a shape or cuts the electrode substrate, and the block 40 are inserted into the mounting groove 23.

The block 40 has a wedge structure, which is tapered toward one side in a longitudinal direction so as to press the punch 10, so that the punch 10 comes into close contact with one of inner surfaces of the mounting groove 23 when the block 40 is inserted into the mounting groove 23.

That is, in order for the block 40 to be gradually tapered in a direction of entering the mounting groove 23, one surface thereof is formed as an inclined surface 41, and the reverse side (an opposite surface) is formed as a vertical surface 42.

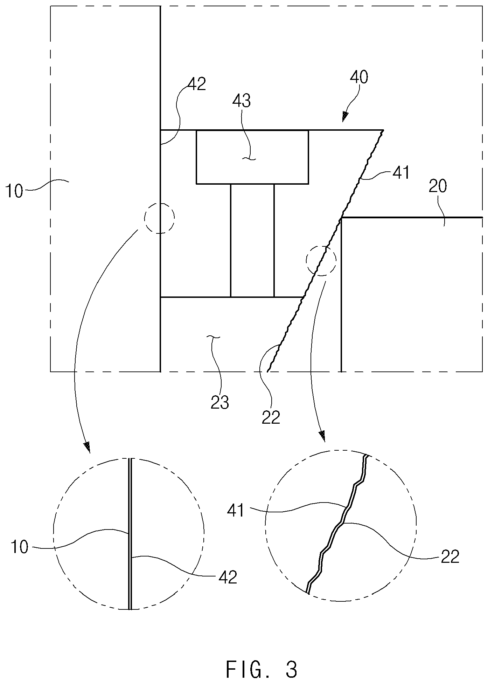

Thus, in the block 40, an included angle α is formed at a point where a virtual line extending from the inclined surface 41 meets a virtual line extending from the opposite surface. In the embodiment, the included angle α ranges from 0.5° to 2°. For reference, although the included angle α is exaggeratedly illustrated in FIGS. 2 and 3 so as to clearly show a state in which the inclined surface 41 is formed, it is desirable that the actual included angle α ranges from 0.5° to 2°, and it is desirable that the included angle α does not exceed 20° as much as possible.

Also, the mounting groove 23 comprises a first inner surface 21 perpendicular to a bottom surface and/or a top surface of the holder 20 and a second inner surface 22 inclined with respect to the bottom surface and/or the top surface of the holder 20.

Thus, when the block 40 enters in a state in which the inclined surface 41 is in contact with the second inner surface 22 of the mounting groove 23, the punch 10 is pressed to be brought into close contact with the first inner surface 21. That is, when the inclined surface 41 of the block 40 is inserted while sliding on the second inner surface 22, the block 40 presses the punch 10 in the left direction in FIG. 2, and the punch 10 is pressed and brought into contact with the first inner surface 21.

Also, the top surface to be exposed when the block 40 is inserted is punched to a certain depth to provide a coupling hole 43, and a female screw thread is provided on an inner circumferential surface of the coupling hole 43. When the block 40 is pulled out to remove the punch 10, the female screw thread may be engaged with and fixed to a male screw thread of a dedicated tool for removing the block 40.

### Second embodiment

A notching apparatus in the embodiment provides a structure which has the same structure as the notching apparatus provided in the first embodiment and is capable of efficiently preventing the block 40 from being separating.

That is, referring to FIG. 3 showing an enlarged view illustrating a state in which a second inner surface 22 of a mounting groove 23 and a block 40 are in contact with each other and an enlarged view illustrating a state in which a punch 10 and the block 40 are in contact with each other, an inclined surface 41 of the block 40 and the second inner surface 22 of the mounting groove 23 in the embodiment have relatively more uneven surfaces (have high surface roughness), and friction force may further increase.

Of course, friction force may increase by imparting rough surfaces to areas in which a vertical surface 42 of the block 40 and the punch are in contact with each other. However, since it may be difficult to remove the block 40 so as to replace the punch 10 later if both surfaces of the block 40 have excessively high friction force, it is desirable that surfaces in which the vertical surface 42 of the block 40 and the punch 10 are in contact with each other are relatively smoother (have low surface roughness).

FIG. 3 illustrates that the areas in which the vertical surface 42 of the block 40 and the punch 10 are in contact with each other have the smooth surfaces while the areas between the inclined surface 41 of the block 40 and the second inner surface 22 of the mounting groove 23 have the uneven surfaces. However, the areas between the inclined surface 41 of the block 40 and the second inner surface 22 of the mounting groove 23 may have the smooth surfaces, and the areas in which the vertical surface 42 of the block 40 and the punch 10 are in contact with each other may have the uneven surfaces. Also, according to the surface roughness and the material properties of the block 40 and the punch 10, the areas between the inclined surface 41 of the block 40 and the second inner surface 22 of the mounting groove 23 and the surfaces in which the vertical surface 42 of the block 40 and the punch 10 are in contact with each other may have appropriate roughness.

For reference, it is desirable that the block 40 is made of the same metal material as the holder 20 so as to minimize deformation of the block 40 due to external impact and heat as much as possible. However, when manufactured as described above, different roughness are given to the surfaces to increase the friction force, and thus separation may be prevented.

Also, the block 40 may be made of a metal material having a friction coefficient greater than that of the punch 10.

The present invention having the above-described configuration may prevent the punch 10 from shaking because the wedge-shaped block 40 is inserted into the mounting groove 23 together with the punch 10 and presses the punch 10 so that the punch 10 comes into close contact with one of the inner surfaces of the mounting groove 23.

Since the friction force between the block 40 and the second inner surface 22 is greater than the friction force between the block 40 and the first inner surface 21, the block 40 may be prevented from separating.

The block 40 is punched to provide a coupling hole 43, and a female screw thread is provided on an inner circumferential surface of the coupling hole 43. Thus, the block 40 may be removed using a common tool and a dedicated tool.

Although the present invention is described by specific embodiments and drawings, the present invention is not limited thereto, and various changes and modifications may be made by a person skilled in the art to which the present invention pertains within the scope of the appended claims.

## Claims

1. A notching apparatus in which a punch descends to notch an electrode, the notching apparatus comprising:
a holder (20) having one surface in which a mounting groove (23) is provided;
the punch (10) having one end inserted into the mounting groove (23); and
a block (40) inserted into the mounting groove (23) together with the punch (10),
wherein, when inserted into the mounting groove (23), the block (40) presses the punch (10) so that the punch (10) comes into close contact with one of inner surfaces of the mounting groove (23),
wherein the mounting groove (23) comprises a first inner surface (21) perpendicular to a bottom surface of the holder (20) and a second inner surface (22) inclined with respect to the bottom surface of the holder (20); and
the block (40) enters in contact with the second inner surface (22) to press the punch (10) toward the first inner surface (21),
wherein, a portion of the block (40), which is in contact with the second inner surface (22), is provided as an inclined surface; and
when the portion provided as the inclined surface comes into contact with the second inner surface (22), an opposite surface of the inclined surface of the block (40) is parallel to an outer circumferential surface of the punch (10) to come into contact with the punch (10),
wherein friction force between the second inner surface (22) and the block (40) is greater than that between the block (40) and the punch (10).

2. The notching apparatus of claim 1, wherein, in the block (40), an angle at a point where a virtual line extending from the inclined surface meets a virtual line extending from the opposite surface ranges from 0.5° to 2°.

3. The notching apparatus of claim 1, wherein friction force between the block (40) and the second inner surface (22) is greater than that between the block (40) and the first inner surface (21).

4. The notching apparatus of claim 1, wherein the block (40) is punched to provide a coupling hole (43), and
a female screw thread is provided on an inner circumferential surface of the coupling hole (43).

5. The notching apparatus of claim 1, wherein the block (40) is made of a metal material having a friction coefficient greater than that of the punch (10).

6. The notching apparatus of claim 1, wherein a surface between the second inner surface (22) and the block (40) is rougher than that between the block (40) and the punch (10) to increase in friction force.

7. The notching apparatus of claim 1, wherein the block (40) is made of the same metal material as the holder (10) .

## Patentansprüche

1. Einkerbvorrichtung, bei welcher ein Stempel zum Einkerben einer Elektrode niedergeht, wobei die Einkerbvorrichtung umfasst:
eine Halterung (20), welche eine Fläche aufweist, in welcher eine Befestigungsnut (23) bereitgestellt ist;
den Stempel (10), welcher ein in die Befestigungsnut (23) eingeführtes Ende aufweist, und
einen Block (40), welcher zusammen mit dem Stempel (10) in die Befestigungsnut (23) eingeführt ist,
wobei der Block (40), wenn er in die Befestigungsnut (23) eingeführt ist, den Stempel (10) derart drückt, dass der Stempel (10) mit einer der inneren Flächen der Befestigungsnut (23) in engen Kontakt kommt,
wobei die Befestigungsnut (23) eine erste innere Fläche (21), welche senkrecht zu einer Bodenfläche der Halterung (20) ist, und eine zweite innere Fläche (22) umfasst, welche in Bezug auf die Bodenfläche der Halterung (20) geneigt ist; und
der Block (40) in Kontakt mit der zweiten inneren Fläche (22) tritt, um den Stempel (10) in Richtung der ersten inneren Fläche (21) zu drücken,
wobei ein Abschnitt des Blocks (40), welcher in Kontakt mit der zweiten inneren Fläche (22) ist, als eine geneigte Fläche bereitgestellt ist; und
wenn der als die geneigte Fläche bereitgestellte Abschnitt in Kontakt mit der zweiten inneren Fläche (22) kommt, eine entgegengesetzte Fläche der geneigten Fläche des Blocks (40) parallel zu einer äußeren Umfangsfläche des Stempels (10) ist, um mit dem Stempel (10) in Kontakt zu kommen,
wobei eine Reibungskraft zwischen der zweiten inneren Fläche (22) und dem Block (40) größer ist als die zwischen dem Block (40) und dem Stempel (10).

2. Einkerbvorrichtung nach Anspruch 1, wobei in dem Block (40) ein Winkel an einer Stelle, an welcher eine sich von der geneigten Fläche erstreckende virtuelle Linie auf eine sich von der entgegengesetzten Fläche erstreckende virtuelle Linie trifft, von 0,5° bis 2° reicht.

3. Einkerbvorrichtung nach Anspruch 1, wobei eine Reibungskraft zwischen dem Block (40) und der zweiten inneren Fläche (22) größer ist als die zwischen dem Block (40) und der ersten inneren Fläche (21).

4. Einkerbvorrichtung nach Anspruch 1, wobei der Block (40) gelocht ist, um ein Kopplungsloch (43) bereitzustellen, und
ein Innengewinde an einer inneren Umfangsfläche des Kopplungslochs (43) bereitgestellt ist.

5. Einkerbvorrichtung nach Anspruch 1, wobei der Block (40) aus einem Metallmaterial hergestellt ist, welches einen Reibungskoeffizienten aufweist, welcher größer als der des Stempels (10) ist.

6. Einkerbvorrichtung nach Anspruch 1, wobei eine Fläche zwischen der zweiten inneren Fläche (22) und dem Block (40) zur Erhöhung der Reibungskraft rauer ist als die zwischen dem Block (40) und dem Stempel (10).

7. Einkerbvorrichtung nach Anspruch 1, wobei der Block (40) aus dem gleichen Metallmaterial wie die Halterung (10) hergestellt ist.

## Revendications

1. Appareil à encocher dans lequel un poinçon descend pour encocher une électrode, l'appareil à encocher comprenant :
un support (20) présentant une surface dans laquelle une rainure de montage (23) est prévue ;
le poinçon (10) présentant une extrémité insérée dans la rainure de montage (23) ; et
un bloc (40) inséré dans la rainure de montage (23) conjointement avec le poinçon (10),
dans lequel, lorsqu'il est inséré dans la rainure de montage (23), le bloc (40) presse le poinçon (10) de sorte que le poinçon (10) vient en contact étroit avec une de surfaces intérieures de la rainure de montage (23),
dans lequel la rainure de montage (23) comprend une première surface intérieure (21) perpendiculaire à une surface inférieure du support (20) et une deuxième surface intérieure (22) inclinée par rapport à la surface inférieure du support (20) ; et
le bloc (40) entre en contact avec la deuxième surface intérieure (22) pour presser le poinçon (10) en direction de la première surface intérieure (21),
dans lequel une partie du bloc (40), qui est en contact avec la deuxième surface intérieure (22), est prévue comme une surface inclinée ; et
lorsque la partie prévue comme la surface inclinée vient en contact avec la deuxième surface intérieure (22), une surface opposée de la surface inclinée du bloc (40) est parallèle à une surface circonférentielle extérieure du poinçon (10) pour venir en contact avec le poinçon (10),
dans lequel une force de friction entre la deuxième surface intérieure (22) et le bloc (40) est plus grande qu'entre le bloc (40) et le poinçon (10).

2. Appareil à encocher selon la revendication 1, dans lequel, dans le bloc (40), un angle au niveau d'un point où une ligne virtuelle s'étendant à partir de la surface inclinée rejoint une ligne virtuelle s'étendant à partir de la surface opposée est dans la plage de 0,5° à 2°.

3. Appareil à encocher selon la revendication 1, dans lequel la force de friction entre le bloc (40) et la deuxième surface intérieure (22) est supérieure à celle entre le bloc (40) et la première surface intérieure (21).

4. Appareil à encocher selon la revendication 1, dans lequel le bloc (40) est poinçonné pour fournir un trou d'accouplement (43), et
un filet femelle est prévu sur une surface circonférentielle intérieure du trou d'accouplement (43).

5. Appareil à encocher selon la revendication 1, dans lequel le bloc (40) est fait d'un matériau métallique présentant un coefficient de friction supérieur à celui du poinçon (10).

6. Appareil à encocher selon la revendication 1, dans lequel une surface entre la deuxième surface intérieure (22) et le bloc (40) est plus rugueuse que celle entre le bloc (40) et le poinçon (10) pour augmenter en force de friction.

7. Appareil à encocher selon la revendication 1, dans lequel le bloc (40) est fait du même matériau métallique que le support (10).
